(19) **Europäisches Patentamt / European Patent Office / Office européen des brevets**

(11) **EP 4 161 204 B1**

(12) **EUROPEAN PATENT SPECIFICATION**

(45) Date of publication and mention
of the grant of the patent:
**23.04.2025 Bulletin 2025/17**

(21) Application number: **21200340.4**

(22) Date of filing: **30.09.2021**

(51) International Patent Classification (IPC):
**H04W 74/0833** *(2024.01)* **H04W 56/00** *(2009.01)*

(52) Cooperative Patent Classification (CPC):
**H04W 74/0833; H04W 56/0045**

---

(54) **RANDOM ACCESS IMPROVEMENT FOR 5G AIR-TO-GROUND-SYSTEM**

VERBESSERUNG DES WAHLFREIEN ZUGRIFFS FÜR 5G-LUFT-BODEN-SYSTEM

AMÉLIORATION DE L'ACCÈS ALÉATOIRE POUR UN SYSTÈME AIR-SOL 5G

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2023 Bulletin 2023/14**

(73) Proprietor: **SkyFive AG**
**82024 Taufkirchen (DE)**

(72) Inventors:
• **Martins, Pedro**
**2640-377 Igreja Nova - Mafra (PT)**

• **Ohm, Michael**
**70372 Stuttgart (DE)**

(74) Representative: **Bendele, Tanja**
**RUHR-IP Patentanwälte**
**Wolfsbachweg 29**
**45133 Essen (DE)**

(56) References cited:
**EP-A1- 3 157 296       EP-B1- 2 408 253
EP-B1- 2 427 018**

**Description**

The invention relates to an iterative method for accessing a cellular communications network by a transceiver equipment, said transceiver equipment transmitting at least one PRACH preamble with a Timing Advance Offset (TAO) comprising $t_0, ... , t_{k-1}, t_k, ... , t_n$ over a Random Access Channel to a base station serving a maximum cell range C, said PRACH preamble being a long sequence PRACH preamble supporting a cell range of r kilometres which is less than the maximum cell range C, the method comprising the steps of: a. transmitting the PRACH preamble with an initial starting TAO $t_0$, said starting TAO $t_0$ being calculated by the transceiver equipment depending on the maximum cell range C, and b1. determining a valid Random Access Response being received within a predetermined waiting interval, or b2. determining no valid Random Access Response being received within a predetermined waiting interval and transmitting the PRACH preamble with a $k^{th}$ TAO $t_k$, said $k^{th}$ TAO $t_k$ being calculated by adding and/or subtracting a multiple of t as being a function of r to a preceding TAO $t_{k-1}$, and b3. repeating steps b1 and b2 until a valid Random Access Response is being received. Moreover, the invention relates to a related iterative method for handover from the base station serving the maximum cell range C to a base station serving a maximum cell range C1, and to a transceiver equipment comprising means for carrying out the iterative method as well as to a computer program product comprising instructions to carry out the iterative method and to a data carrier signal carrying the computer program product.

5G is the fifth-generation technology standard for broadband cellular networks. The air interface defined by Third Generation Partnership Project (3GPP) for 5G is known as New Radio (NR), and the specification is subdivided into two frequency bands: Frequency Range 1 (FR1) that includes sub-6 GHz frequency bands and Frequency Range 2 (FR2) that includes frequency bands from 24.25 GHz to 52.6 GHz.

When connecting a transceiver equipment (user equipment, UE/on-board equipment, OBE) to 5G network, it has to synchronize in downlink as well as in uplink with a base station (gNodeB). Downlink synchronisation can be achieved after decoding Minimum System Information (MSI) comprising MIB and SIB 1. In 5G NR, MIB provides all the required information to the transceiver equipment for decoding SIB 1 which is a cell-specific information carrying the critical information required to access the cell. After decoding SIB 1, the transceiver equipment gets the required information for uplink synchronisation, i.e. to perform Random Access (RA) Procedure which is a contention based four step procedure or a contention free three step procedure.

In contention based Random Access (CBRA), the transceiver equipment randomly selects an RA preamble sequence from the set of sequences available in the cell and transmits the preamble on a Random Access Channel (RACH) to the base station. RACH is a common transport channel in the uplink and is always mapped one-to-one onto Physical Random Access Channels (PRACHs). By transmitting the preamble, the transceiver equipment initiates the RA procedure with a RA Request message (MSG1). The base station detects the preamble transmission and sends a RA Response message (MSG2). If the transceiver equipment receives a response containing an RA preamble identifier which is the same as the identifier contained in the transmitted RA preamble, the response is successful. The transceiver equipment then transmits a scheduled transmission message (MSG3) over the Physical Uplink Shared Channel (PUSCH). After the transceiver equipment sends MSG3, a contention resolution timer of 8, 16, 24, 32, 40, 48, 56 or 64 ms starts. If the transceiver equipment considers the contention resolution successful by receiving contention resolution message (MSG4), it stops the timer and the RA procedure is completed.

In contrast, in contention free Random Access (CFRA), the RA preamble is allocated by the base station to the transceiver equipment (RA Preamble Assignment). Then, the transceiver equipment transmits the preamble on the RACH to the base station (MSG1) and the base station only has to send a RA response (MSG2) to complete the RA procedure.

In 5G NR, Random Access supports 13 types of PRACH preamble formats for FR1/FR2 known as Format 0/1/2/3, Format A1/A2/A3, Format B1/B2/B3/B4, Format C0/C2 which can be grouped into two categories: Short sequence PRACH preambles having a sequence length of L = 139 and long sequence PRACH preambles having a sequence length of L = 839. The former are designed to target the small/normal cell and indoor deployment scenarios, whereas the latter can be used for very large cells (up to 100 km).

Usually, the transceiver equipment adapts the PRACH format it uses to the PRACH format broadcast from the base station since the PRACH format to be used is part of the system information parameters broadcast by the base station in the downlink and received by the transceiver equipment. The base station is configured to use one of the predefined PRACH formats depending on its size. This presents the disadvantage that a part of the cell capacity is wasted by using large PRACH messages in large cells with low user density but high capacity demand due to the long sequence PRACH format. Moreover, in case of air-to-ground (ATG) systems handling large inter-site distances and coverage ranges (up to 300 km) which are well beyond the maximum cell range of standardized long PRACH formats, the RA procedure will fail due to preamble ambiguity when a transceiver equipment, in particular as being part of an aircraft, attempts to access the cell and is located outside the maximum cell range. It is therefore necessary to implement a mechanism that allows successful random access in large cells, even when the aircraft, is located at long distances from the base station. With regard to this problem, current ATG implementations, based on 4G technology, make use of an iterative method for the RA procedure, described by European patents EP2408253B1 and EP2427018B1. According to them, the size of the RACH search window is deliberately configured smaller than the size foreseen in the communications standard for a cell of similar cell size than the considered cell the communication between the base station and the transceiver equipment is taking place in. Thus, the method foresees that a RACH preamble has to be sent by the transceiver equipment with an initial timing advance and if it does not get a successful answer, a second RACH preamble has to be sent with a second timing advance, said second timing advance depending on the first timing advance and on the RACH search window duration of the base station. The method can be applied iteratively until the base station acknowledges the RACH preamble as correctly received.

This presents the advantage of using RACH sequences in large cells, that support a range which is lower than the cell radius, while having the RACH procedure still working and more capacity being available for uplink traffic from the transceiver equipment towards the base station. However, depending on the distance of the transceiver equipment or aircraft from the base station, the time needed to get a successful answer is quite long, since the method considers a static cell range and initial timing advance. Thus, there is a need for an iterative method reacting flexible on various cell ranges by considering the respective cell range in its timing advance search.

EP 3157296 A1 discloses an iterative method for performing random access in which the timing advance is updated for each attempt of sending the preamble. An initial timing advance value is determined based on the DL pathloss measured by the UE, and is then updated by trying different predetermined timing advance values from a table that correspond to different pathloss values.

It is therefore the object of the invention to provide an iterative method and related devices for initial access or for handover or any other cause that requires a random access procedure in a cellular communications network, in particular adhering to the 5G NR standard, which shortens the time the transceiver equipment is waiting to get a successful RA Response although the transceiver equipment being quite far away from a base station. In particular, a method and devices should be provided which can be used in ATG systems handling large inter-site distances and coverage ranges exceeding the maximum cell range of standardized long PRACH formats.

The object of the invention is solved by an iterative method according to claim 1 and according to claim 10, a transceiver equipment according to claim 12 as well as a computer program product according to claim 14 and a data carrier signal carrying the computer program product according to claim 15. Embodiments of the invention are illustrated in detail in dependent claims and description.

According to the invention, the object is solved by an iterative method for accessing and preferably also for handover in a cellular communications network, in particular adhering to the 5G NR standard, by a transceiver equipment, said transceiver equipment transmitting a PRACH preamble with a Timing Advance Offset (TAO) over a Random Access Channel to a base station serving a maximum cell range C, said PRACH preamble supporting a cell range of $r < C$ and being transmitted with an initial starting TAO which is calculated by the transceiver equipment depending on the maximum cell range C or, if no valid RA Response is being received within a predetermined waiting interval from the base station, being transmitted with a subsequent TAO which is calculated by adding and/or subtracting a multiple of t as being a function of r to the preceding TAO until a valid RA Response is being received.

The RA procedure according to the invention relies on an iterative method based on partitions of the planned cell range into r kilometres intervals. Several TAOs are tested, corresponding to several positions of the transceiver equipment (UE/OBE) within the cell. The transceiver equipment transmits the PRACH preamble in advance, targeting the PRACH window at the base station (gNodeB), until reception of the RA Response with a valid preamble ID and an absolute timing advance value intended to correct the tested TAO. The starting point of the iterative method depends on the maximum cell radius, the maximum cell range C (in kilometres). Like this, the RA procedure is transparent and requires no modification in the gNodeB, as it considers that the UE/OBE is within a range of r kilometers.

The method foresees that if a PRACH preamble sent by the transceiver equipment with an initial TAO does not get a successful answer, the PRACH preamble is sent with a second TAO, said second TAO being different from the initial TAO. The same applies for a subsequent TAO ($t_k$) if a preceding TAO ($t_{k-1}$) is not getting a successful answer. Preferably, each $k^{th}$ TAO $t_k$ is different from its preceding TAO $t_{k-1}$ and/or any two TAOs are different from one another.

In doing so, the method according to the invention relies on the assumption that the base station sends the RA response as a reply to a PRACH preamble that arrived wholly within the PRACH detection window at the base station. Preferably, the detection window at the base station has a duration smaller than the time needed for round-trip delay from the transceiver equipment to the base station plus the PRACH preamble duration.

According to the invention, the PRACH preamble transmitted by the transceiver equipment to the base station is a long sequence PRACH preamble. They can only be used for FR1 frequency bands. Subcarrier spacings for long sequence PRACH preambles can be either 1.25 kHz or 5 kHz. A long sequence PRACH preamble with 1.25 kHz subcarrier spacing occupies 2, 3 or 6 resource blocks, respectively for PUSCH subcarrier spacings of 60 kHz, 30 kHz or 15kHz. A long sequence PRACH preamble with 5 kHz subcarrier spacing occupies 6, 12 or 24 resource blocks, respectively for PUSCH subcarrier spacings of 60 kHz, 30 kHz or 15 kHz.

In 5G NR, 3GPP TS 38.211 has specified four different long sequence PRACH preamble formats as listed in the table below:

| Format | Sequence length (L) | Subcarrier spacing | Cyclic Prefix (CP) | Sequence | Guard Period (GP) | Preamble duration |
|---|---|---|---|---|---|---|
| 0 | 839 | 1.25 kHz | 3168κ | 24576κ | 2976κ | 1 ms |
| 1 | 839 | 1.25 kHz | 21024κ | 2 * 24576κ | 21984κ | 3 ms |
| 2 | 839 | 1.25 kHz | 4688κ | 4 * 24576κ | 29264κ | 4 ms |
| 3 | 839 | 5 kHz | 3168κ | 4 * 6144κ | 2976κ | 1 ms |

wherein $\kappa = 64 = T_s/T_c$ with $T_s$ LTE basic time unit and Tc 5G NR basic time unit

Even if the method and related devices according to the invention are preferably designed for 5G NR, they may also be applicable for 4G or LTE, and any later communications standard, as e.g. 6G, 7G and/or 8G. In particular, PRACH preamble formats 0 and 1 in 5G NR are the same as in 4G or LTE.

The preambles consist of two parts: Cyclic Prefix (CP) and (preamble) Sequence, possibly in repetitions. CP is used to avoid the effect of interference caused by multipath propagation while the sequence allows identification of each RA attempt. In addition, a gap or Guard Period (GP) is used to avoid interference with the next following sub-frame. The duration of the gap depends on the cell size and corresponds to the maximum round trip delay in the cell. Indeed a large cell size implies a long round trip delay between the downlink signal and the uplink transmission.

Differences in the time domain of different PRACH preamble formats includes different CP length, Sequence length and number of repetitions as well as GP length. Longer Sequence lengths can be helpful under noised condition because they provide longer correlation windows to detect the PRACH preamble, while longer CP lengths gives better tolerance in fading environment. Finally, GP length as being the difference between Preamble duration CP and Sequence duration is roughly the distance that an electromagnetic wave can travel during GP divided by 2 (round trip delay). Thus, the different PRACH preamble formats accommodate different cell ranges as can be seen from the table below:

| Format | Sequence length (L) | Subcarrier spacing | CP duration | Sequence duration | GP duration | Cell range |
|---|---|---|---|---|---|---|
| 0 | 839 | 1.25 kHz | 103.13 μs | 800 μs | 96.88 μs | 14.5 km |
| 1 | 839 | 1.25 kHz | 684.38 μs | 2 * 800 μs | 715.63 μs | 102.6 km |
| 2 | 839 | 1.25 kHz | 152.60 μs | 4 * 800 μs | 647.40 μs | 22.9 km |
| 3 | 839 | 5 kHz | 103.13 μs | 4 * 200 μs | 96.88 μs | 14.5 km |

The respective cell range listed above is the maximum supported cell radius calculated using two criteria of which the most restrictive is taken: one based on CP duration, the other on GP duration.

Considering the above, for a delay spread of 0 μs (assuming a pure line of sight environment), the maximum cell range is obtained for PRACH preamble format 1, slightly over 100 km, which is not sufficient for an intended cell radius of up to 300 km. Therefore, in the method according to the invention, the PRACH preambles need to be transmitted with a timing advance value, a Timing Advance Offset (TAO), in deviation from the 3GPP standard. The TAO is determined iteratively depending on the maximum cell range C of the cell the communication between the base station and transceiver equipment is taking place in (serving cell).

The cell range ( $r \in \mathbb{R}^+$ ) being supported by the PRACH preamble, and also the maximum cell range (C, C1 $C1 \in \mathbb{R}^+$ ), is exemplarily given in kilometres to simplify calculation with the light speed. Within the scope of the invention, it may be converted into any unit of length known, e.g. in inch (0.0000254 km), foot (12 inches, 0.0003048 km), yard (3 feet, 0.0009144 km), terrestrial mile (5280 feet, 1.609344 m) and/or nautical mile (1.852 km).

Thus, a subject matter of the invention is an iterative method for accessing, and in particular for handover, a cellular communications network, preferably adhering to the 5G New Radio standard, by a transceiver equipment, in particular a UE or OBE, said transceiver equipment transmitting at least one PRACH preamble with a Timing Advance Offset (TAO) comprising $t_0, \ldots, t_{k-1}, t_k, \ldots, t_n$ ( $n \in \mathbb{N}$ ), in particular comprising an initial starting TAO $t_0$, various preceding TAOs $t_{k-1}$ and various $k^{th}$ TAOs $t_k$, over a Random Access Channel to a base station serving a maximum cell range C, said PRACH preamble being a long sequence PRACH preamble supporting a cell range of r kilometres ( $r \in \mathbb{R}^+$ ) which is less than the maximum cell range C (C $> r \in \mathbb{R}^+$ ), the method comprising the steps of:

    a. transmitting the PRACH preamble with an initial starting TAO $t_0$, said starting TAO $t_0$ being calculated by the transceiver equipment depending on the maximum cell range C, and

b1. determining a valid Random Access Response being received within a predetermined waiting interval, or
b2. determining no valid Random Access Response being received within a predetermined waiting interval and transmitting the PRACH preamble with a $k^{th}$ TAO $t_k$, said $k^{th}$ TAO $t_k$ being calculated by adding and/or subtracting a multiple of t as being a function of r, in particular t = 13107.2 * r * $T_c$, to a preceding TAO $t_{k-1}$, and optionally
b3. repeating steps b1 and b2 until a valid Random Access Response is being received.

This means, after performing step a., the UE/OBE waits for a valid Random Access Response and determines if it has been (b1.) or not has been (b2.) received within a predetermined waiting interval. If step b1. has already been successful, the procedure ends immediately. Otherwise, step b2. is performed, followed by step b3. in which the UE/OBE again waits for a valid Random Access Response and determines if it has been (b1. - second iteration) or not has been (b2. - second iteration) received within a predetermined waiting interval, and so on. In this context, the iterative method according to the invention is adapted to let the UE/OBE finally receive a valid Random Access Response, i.e. accessing the cellular communications network, even when located beyond the cell range supported by the selected PRACH preamble.

According to the invention, the standard RA procedures are used, except for the inclusion of the TAO in the random access preamble and the exclusion of the backoff timer in case the RA Response is not received. Thus, during the TAO search or pre-alignment procedure, the normal backoff mechanism will preferably not apply. This implies that if no RA Response is received for a preamble transmission the transceiver equipment will not additionally delay any subsequent RA transmission. This is intended to speed up the pre-alignment procedure and the overall RA procedure.

If a spurious MSG2 has been received from the base station, the transceiver equipment will continue with the TAO search, until a valid RA Response is received. Also, if the transceiver equipment has not received the MSG4 after MSG3 has been sent, the UE/OBE will continue iterating the remaining TAO test values until the entire cell range has been covered. According to the invention, a valid RA response is understood to mean a RA Response containing a PRACH preamble identifier (ID) which is the same as the identifier contained in the PRACH preamble transmitted as being a reply to a PRACH preamble that arrived wholly in the related detection window at the base station. In turn, the valid RA response is received by the transceiver equipment within a predetermined waiting interval. The transceiver equipment waits for that RA response within a RA response window, but if the transceiver equipment does not receive a response within the RA response window or fails to verify the response, the response fails.

The TAO search or pre-alignment procedure according to the invention needs a set of TAO trial values that correspond to a partitioning of the maximum cell radius into chunks representing intervals of r kilometres, for example intervals of approx. 14.5 km for PRACH preamble format 0. These serve as hypotheses of the aircraft location which are tested by PRACH transmissions. The time for cycling through this set and, thus, covering the entire cell, is minimized by selecting the TAOs such that there is little or no overlap between the corresponding r kilometres intervals.

Thus, the $k^{th}$ TAO ( $k \in \mathbb{N}$ ) preferably corresponds to a chunk representing an interval of r kilometres which is a part of the maximum cell range C. Mathematical correlation between the respective TAO and the kilometers the transceiver equipment is distanced from the base station is preferably given by the following equation: TAO = 13107.2 * r * $T_c$ for 5G NR.

The above equation is based on various mathematical considerations. The TAO corresponds to the round trip propagation delay between the UE/OBE and the gNodeB. This can be calculated as 2 * 1000* r km / c, where r is the cell range supported by the preamble and c is the speed of light (in m/s). Further, the TAO is applied by the UE/OBE from Timing Advance ($T_A$) as $T_A$ * 16 * 64 /$2^{\mu}$* $T_c$, where $\mu$ is the numerology. Thus, $T_A$ can be calculated as: $T_A$ *16 * 64 * $T_c$ = 2 * 1000 * r / c $\Leftrightarrow$ $T_A$ = 1000 * r / ($2^{9-\mu}$ * c *$T_c$) $\Leftrightarrow$ $T_A$, = 6553.6 * r / $2^{9-\mu}$. Consequently: TAO = (6553.6 * r / $2^{9-\mu}$) * 16 * 64 / $2^{\mu}$ * $T_c$ = 13107.2 * r * $T_c$.

Let $T_A$, be equal to 372, for example, which corresponds to TAO = 372 * 16 * 64 / 2 $T_c$ = 190464 $T_c$, where $T_c$ is the basic time unit in 5G NR and as per 3GPP TS 38.211 can be expressed as 1/(480 * $10^3$ * 4096) * $10^6$ $\mu$s = 100/196608 $\mu$s [corresponds to 0.509 ns]. Then, $T_A$ = 372 implies 96.875 $\mu$s which leads to 29.0625 km considering the light speed (0.3 km/$\mu$s). Since the distance to be taken into account is half of the round trip delay, $T_A$, = 372 finally corresponds to 14.531 km. Thus, it can be learned from the preceding that $T_A$, = 1 is equivalent to a distance of 0.0390625 kilometres and, consequently, that a one kilometre distance needs a $T_A$, of 25.6 and a TAO of 13107.2 * $T_c$.

Analogously, in 4G or LTE, let $T_A$, be equal to 2976, for example, which corresponds to TAO = 2976 $T_s$, where $T_s$ is the basic time unit in LTE and as per 3GPP TS 38.211 can be expressed as 1/(15 * $10^3$ * 2048) * $10^6$ $\mu$s = 100/3072 $\mu$s [corresponds to 32.552 ns]. Then, $T_A$, = 2976 implies 96.875 $\mu$s which leads to 29.0625 km considering the light speed (0.3 km/$\mu$s). Since the distance to be taken into account is half of the round trip delay, $T_A$, = 2976 finally corresponds to 14.531 km. Thus, it can be learned from the preceding that $T_A$ = 1 is equivalent to a distance of 0.0048828125 kilometres and, consequently, that a one kilometre distance needs a $T_A$ of 204.8 and a TAO of 204.8 * $T_s$. Thus, in 4G or LTE, mathematical correlation between the respective TAO and the kilometers the transceiver equipment is distanced from the base station is preferably given by the following equation: TAO = 204.8 * r * $T_s$ for LTE. This means, using 204.8 * r * $T_s$ instead of 13107.2 * r * $T_c$, in particular replacing 13107.2 * r * $T_c$ by 204.8 * r * $T_s$ where appropriate, shall render the present invention applicable to 4G or LTE also.

Considering the above, partitioning of the maximum cell radius C and/or C1 according to the invention is preferably carried out by using different TAOs being a multiple of $t = 13107.2 * r * T_c$. In this context, it is preferred for r to be approx. 14.5 km, 22.9 km or 102.6 km and/or for t to be approx. $372 * 2^{10-\mu} * T_c$, $586 * 2^{10-\mu} * T_c$ or $2627 * 2^{10-\mu} * T_c$. Particularly preferably, r is approx. 14.5 km and t is $372 * 2^{10-\mu} * T_c$, in particular $190464 * T_c$. Consequently, the $k^{th}$ TAOs may be $t_k = 0$ (interval of approx. 0 km to 14.5 km distance), $t_k = 372 * 2^{10-\mu} * T_c$ (interval of approx. 14.5 km to 29 km distance), $t_k = 744 * 2^{10-\mu} * T_c$ (interval of approx. 29 km to 43.5 km distance), $t_k = 1116 * 2^{10-\mu} * T_c$ (interval of approx. 43.5 km to 58 km distance), $t_k = 1488 * 2^{10-\mu} * T_c$ (interval of approx. 58 km to 72.5 km distance), $t_k = 1860 * 2^{10-\mu} * T_c$ (interval of approx. 72.5 km to 87 km distance), $t_k = 2232 * 2^{10-\mu} * T_c$ (interval of approx. 87 km to 101.5 km distance), $t_k = 2604 * 2^{10-\mu} * T_c$ (interval of approx. 101.5 km to 116 km distance), $t_k = 2976 * 2^{10-\mu} * T_c$ (interval of approx. 116 km to 130.5 km distance), $t_k = 3348 * 2^{10-\mu} * T_c$ (interval of approx. 130.5 km to 145 km distance), $t_k = 3720 * 2^{10-\mu} * T_c$ (interval of approx. 145 km to 159.5 km distance), $t_k = 4092 * 2^{10-\mu} * T_c$ (interval of approx. 159.5 km to 174 km distance), $t_k = 4464 * 2^{10-\mu} * T_c$ (interval of approx. 174 km to 188.5 km distance), and/or $t_k = 4832 * 2^{10-\mu} * T_c$ (interval of approx. 188.5 km to 203 km distance), based on a maximum cell range C of approx. 200 km. In general, according to the invention, it is preferred for the $k^{th}$ TAO $t_k$ to be greater than or equal to 0 and less than or equal to $10000 * 2^{10-\mu} * T_c$, preferably greater than or equal to 0 and less than or equal to $8000 * 2^{10-\mu} * T_c$, particularly preferably greater than or equal to 0 and less than or equal to $5000 * 2^{10-\mu} * T_c$.

According to the invention, the maximum cell range C and/or C1 represents the distance, the respective base station is serving for. The maximum cell range corresponds to a vector in any spatial direction, starting from the base station and ending at the UE/OBE, that defines the target coverage (minimum allowed RSRP level) or dominance (with regards to neighbor cells) area of the cell. In particular, the amount of the vector may be greater than or equal to 1 to greater than or equal to 500 km, preferably greater than or equal to 100 km, more preferably greater than or equal to 150 km, particularly preferably greater than or equal to 300 km. Ideally, the cells are circularly shaped, but they may also possess any other shape, like a hexagon for example. Unless explicitly stated, the explanations for C also apply to C1.

Preferably, the above TAOs correspond with a maximum cell range of more than 150 km of a radio cell being served by the base station, preferably more than 200 km, particularly preferably more than 300 km, thus advantageously enabling the transceiver equipment to use such TAOs for the RA procedure which have a high probability of succeeding for random access in situations with very large cells. TAOs corresponding with such cell ranges exceeding the 5G NR standard definition enable the transceiver equipment to employ "exceedingly" large timing advance values thus deliberately violating the 5G NR standard, which allows to adapt the RA procedure to large radio cells. In doing so, the compatibility with excessively large cells can be achieved without any modifications to the base station, since a conventional base station may successfully be accessed during RA process using the embodiments according to the invention. Particularly, the RA procedure according to the invention does not necessarily require to take into consideration the PRACH preamble format currently used by the base station, which is also broadcast to the terminals. However, according to further embodiments, this information may also be employed by the transceiver equipment (terminal) to fine-tune the determination of timing advance values for the further PRACH preambles.

According to the iterative character of the invention, a subsequent TAO ($k^{th}$ TAO $t_k$ or $t1_k$) is calculated starting from a preceding TAO (TAO $t_{k-1}$ or $t1_{k-1}$). Consequently, the $1^{st}$ TAO $t_1$ or $t1_1$, has to be calculated from an initial starting TAO $t_0$ or $t1_0$. Unless explicitly stated, the explanations for $t_0$, ... , $t_{k-1}$ and $t_k$ also apply to $t1_0$, ... , $t1_{k-1}$ and $t1_k$.

In this context, it is provided by the invention that $t_0$ is calculated by the transceiver equipment depending on the maximum cell range C. This means $t_0$ corresponds with a specific point within the maximum cell range C. For example, $t_0$ may not correspond with a distance of 0 kilometres or with a distance of C kilometres. It may be preferred for $t_0$ to correspond with a point being in a range of greater than or equal to 25 % to less than or equal to 75 %, in particular greater than or equal to 40 % to less than or equal to 60 %, within the maximum cell range C.

Particularly preferably, the initial starting TAO $t_0$ corresponds with the mid-point of the maximum cell range C, thus corresponding to a point at 50 % of the maximum cell range C, in particular $t_0 = 6553.6/\text{km} * C * T_c$. This assumes that the position of the transceiver equipment is random within the cell and there is equal probability for the transceiver equipment to be located at a distance before or behind as well as higher or lower than this point and that, in particular, a related aircraft can be moving towards the cell edge or the cell center also with equal probability.

As the transceiver equipment has to support coexistence of cells with different Time Division Duplex (TDD) patterns, this requires the transceiver equipment to determine by itself the TAO intervals to use and the starting point of the procedure (first TAO to be tested). The transceiver equipment must be able to derive this from the *tdd-UL-DL-Configuration Common* information element, included in SIB1 and *RRCReconfiguration* messages.

Thus, in a preferred embodiment of the invention, the initial starting TAO $t_0$ is calculated by the transceiver equipment using information on a default uplink-downlink configuration provided by the base station to determine the maximum cell range C, said default uplink-downlink configuration including reference subcarrier spacing and at least one slot pattern. Like this, the starting point of the iterative procedure will depend on the maximum cell radius, calculated from the information contained in the default uplink-downlink configuration provided by the base station. In this context, it is preferred for the initial starting TAO $t_0$ to be calculated from the guard period, generated by using flexible symbols and slots in the TDD timing pattern.

TDD uses a single frequency band for both transmit and receive. Then it shares that band by assigning alternating time slots to transmit and receive operations. Single time slots can be divided into multiple segments of consecutive symbols (OFDM symbols) which can be classified as "downlink" (denoted "D"), "uplink" (denoted "U") and "flexible" (denoted "F"). The transceiver equipment assumes that downlink reception can take place only in symbols marked D or F. Similarly, the UE can transmit in the uplink only in slots marked U or F.

In 5G NR, the number of symbols per slot is 14 in case of normal CP or 12 in case of extended CP. The combinations of D symbol, U symbol and F symbol within a slot rely on the gNodeB providing the UE/OBE with a specific uplink/downlink transmission pattern that can be signalled using RRC signalling, Layer 1 signalling or a combination of both. The RCC signalling provides a semi-static configuration that remains valid until any reconfiguration done through RRC signalling. Layer 1 signalling enables a dynamic reconfiguration of the symbols using DCI format 2_0 and 3GPP specific slot patterns, defined using Slot Format Indicators that are pointers to the table below:

| | Symbol Number in a slot | | | | | | | | | | | | | |
|---|---|---|---|---|---|---|---|---|---|---|---|---|---|---|
| Format | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |

(continued)

| Format | Symbol Number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | D | F | D | D | D | D | D | D | F |
| 47 | D | D | D | D | D | F | F | D | D | D | D | D | F | F |
| 48 | D | D | F | F | F | F | F | D | D | F | F | F | F | F |
| 49 | D | F | F | F | F | F | F | D | F | F | F | F | F | F |
| 50 | F | U | U | U | U | U | U | F | U | U | U | U | U | U |
| 51 | F | F | U | U | U | U | U | F | F | U | U | U | U | U |
| 52 | F | F | F | U | U | U | U | F | F | F | U | U | U | U |
| 53 | F | F | F | F | U | U | U | F | F | F | F | U | U | U |
| 54 | D | D | D | D | D | F | U | D | D | D | D | D | F | U |
| 55 | D | D | F | U | U | U | U | D | D | F | U | U | U | U |
| 56 | D | F | U | U | U | U | U | D | F | U | U | U | U | U |
| 57 | D | D | D | D | F | F | U | D | D | D | D | F | F | U |
| 58 | D | D | F | F | U | U | U | D | D | F | F | U | U | U |
| 59 | D | F | F | U | U | U | U | D | F | F | U | U | U | U |
| 60 | D | F | F | F | F | F | U | D | F | F | F | F | F | U |

The number of slots in a subframe/frame depends on the numerology $\mu$:

| $\mu$ | Subcarrier Spacing ($2^\mu$ * 15 kHz) | Slots/Subframe ($2^\mu$) | Slots/Frame ($2^\mu$*10) | Slot length |
|---|---|---|---|---|
| 0 | 15 kHz | 1 | 10 | 1 ms |
| 1 | 30 kHz | 2 | 20 | 0.5 ms |
| 2 | 60 kHz | 4 | 40 | 0.25 ms |
| 3 | 120 kHz | 8 | 80 | 0.125 ms |

(continued)

| μ | Subcarrier Spacing (2$^\mu$ * 15 kHz) | Slots/Subframe (2$^\mu$) | Slots/Frame (2$^\mu$*10) | Slot length |
|---|---|---|---|---|
| 4 | 240 kHz | 16 | 160 | 0.0625 ms |

Considering the above, it is preferred for the maximum cell range C to be determined from the total duration of flexible OFDM symbols comprised by the at least one slot pattern, the total duration being calculated considering number of the OFDM flexible symbols and the reference subcarrier spacing. This means, the transceiver equipment is able to estimate the maximum cell range C from the number of flexible symbols/slots not statically assigned for uplink or downlink transmission, used as guard period for control of the switching between uplink and downlink transmission. As the length of the guard period determines the maximum supportable cell size, it is particularly preferred for the maximum cell range C to be calculated from that guard period. In particular, the transceiver equipment may determine the number and duration of the flexible symbols from the reference subcarrier spacing, the pattern duration, the number of uplink/downlink slots and the number of uplink/downlink symbols. In case two different patterns are defined, they should preferably have the same guard period defined, so the information can be retrieved from either one. Alternatively, in case two different patterns are defined not having the same guard period defined, the one with the shorter guard period should be used to estimate the maximum cell range information.

Switching between transmission directions has a small hardware delay for both UE/OBE and gNodeB and needs to be compensated by the guard period. In general, a 40 μs margin is considered to account for the transceiver activation delay both at the UE/OBE and gNodeB.

As an example, considering a subcarrier spacing of 30 kHz, the guard period required for several maximum cell ranges C is listed in the table below:

| Planned cell range | Required guard period | Related number of OFDM symbols | Calculated maximum cell range C |
|---|---|---|---|
| 30 km | 0.24 ms | 7 | 31.50 km |
| 50 km | 0.37 ms | 11 | 52.93 km |
| 100 km | 0.71 ms | 20 | 101.14 km |
| 150 km | 1.04 ms | 30 | 154.71 km |
| 200 km | 1.37 ms | 39 | 202.93 km |
| 300 km | 2.04 ms | 58 | 304.71 km |

Based on the number of symbols configured and signalled using the *tdd-UL-DL-ConfigurationCommon* information element, the transceiver equipment can calculate the maximum cell range (last column) and further calculate the required number of r km intervals to go through and select the starting point of the iterative process. Some round down operation of the calculated results may be required (for instance, the nearest lower multiple of 10).

Thus, according to the invention, the maximum cell range C is not directly signalled by the base station. In particular, the transceiver equipment will advantageously be able to derive the maximum cell range C for whatever configuration and configured GP.

The TAO search duration can be optimized by adapting the order in which the hypotheses are tested starting from initial TAO $t_0$. Like this, in a particularly preferred embodiment of the method according to the invention, the iterative method is characterised by comprising the steps of:

a. transmitting the PRACH preamble with an initial starting TAO $t_0$, said starting TAO $t_0$ being calculated by the transceiver equipment depending on the maximum cell range C, and

b1'. determining a valid Random Access Response being received within a predetermined waiting interval, or

b2'. determining no valid Random Access Response being received within a predetermined waiting interval and transmitting the PRACH preamble with a $k^{th}$ TAO $t_k$, where $t_k = t_{k-1} + (-1)^k \cdot kt$ with t = 13107.2 * r * $T_c$ (5G/NR) or t = 204.8 * r * $T_s$ (4G/LTE), and optionally

b3'. repeating steps b1' and b2' until a valid Random Access Response is being received, or

b1". determining a valid Random Access Response being received within a predetermined waiting interval, or

b2". determining no valid Random Access Response being received within a predetermined waiting interval and transmitting the PRACH preamble with a $k^{th}$ TAO $t_k$, where $t_k = t_{k-1} + (-1)^{k-1} \cdot kt$ with t = 13107.2 * r * $T_c$ (5G/NR) or t =

$204.8 * r * T_s$ (4G/LTE), and optionally

b3". repeating steps b1" and b2" until a valid Random Access Response is being received.

Like this, steps b1 to b3 of the method according to the invention are preferably performed as steps b1' to b3' or b1" to b3", respectively or, in an alternative, may be performed as steps b1' to b3' and b1" to b3" in arbitrary order. In particular, step b2. of the method according to the invention is performed as step b2' or b2", both being alternation steps alternating between increasing and decreasing TAOs, but having the difference of the starting direction. In steps b1' to b3', the subsequent PRACH preamble transmissions alternates from the initial starting TAO $t_0$ in increments of $t = 13107.2 * r * T_c$ (5G/NR) or $t = 204.8 * r * T_s$ (4G/LTE) with lower TAOs first, whereas in steps b1" to b3", the subsequent PRACH preamble transmissions alternates from the initial starting TAO $t_0$ in increments of $t = 13107.2 * r * T_c$ (5G/NR) or $t = 204.8 * r * T_s$ (4G/LTE) with higher TAOs first.

The iterative method according to the invention is preferably performed until a valid RA response is finally received or until the maximum or the minimum TAOs are reached. In this context, it may be preferred for the iteration to be continued in cases where only the maximum TAO corresponding with C km or only the minimum TAO corresponding with 0 km are reached until the remaining maximum TAO or minimum TAO is reached as well.

Once a coarsely pre-aligned TAO is found if and when it receives a valid RA response for one of the transmitted PRACH preambles, the transceiver equipment may adapt its timing advance based on the TAO with which the corresponding PRACH preamble was sent and the timing advance command included in the RA response. Thus, in a further preferred embodiment of the invention, the iterative method further comprises step

c. adapting the $k^{th}$ TAO by timing advance command included in the Random Access Response validly received.

The timing advance command informs the transceiver equipment the amount of time that it needs to advance the uplink transmissions. When being included in a RA response, it can range from 0 to 3846.

According to the invention, the PRACH preambles may be transmitted in accordance with the power levels resulting from the specified procedures and the signalled values in the RACH-ConfigCommon field, transmitted in SIB1. Thus, the basis for setting the transmission power of the PRACH preamble may be the downlink pathloss estimate obtained from measuring the cell-specific reference signals on the primary downlink component. If PRACH preamble power ramping is configured, the transceiver equipment may perform a complete TAO search before every power step increment. Only after the TAO search or pre-alignment procedure has been completed for a power level, the transceiver equipment may ramp up the PRACH transmit power by a step according to the signalled values. This means, the iterative method according to the invention may further comprise step

d. ramping up the PRACH preamble transmit power according to the values signalled by the base station in SIB1.

In this context, the network may configure appropriate values for the preamble power ramping step and preamble received target power to avoid excessive RA delay resulting from search in power followed by search in time. It may therefore be preferred for the PRACH preamble transmit power to be the maximum output power, based on a downlink pathloss estimate. Alternatively, the transceiver equipment may choose a transmit power level for sending the PRACH preamble depending on the TAOs associated with the PRACH preamble thus considering a correlation between the timing advance and a distance to the base station.

In a more preferred embodiment of the invention, the PRACH preamble is detected in a PRACH detection window at the base station and the Random Access Response is transmitted by the base station only if the PRACH preamble having wholly been arrived, in particular to the extend it can be detected, within the PRACH detection window. In particular, the PRACH detection window at the base station is configured to receive long sequence PRACH preambles which require a continuous transmission in uplink of at least one 1 ms. The PRACH detection window takes relevant resources that could be used for PUSCH transmission.

Thus, in a particularly preferred embodiment of the invention, the PRACH preamble transmitted by the transceiver equipment to the base station is a long sequence PRACH preamble of PRACH format 0 according to 3GPP communications standard, TS 38.211. It is advantageous to use PRACH format 0 due to its suitable timing structure which corresponds to the lowest PRACH overhead and highest system efficiency. In addition, PRACH preamble format 0 comprises just a single 800 $\mu$s PRACH preamble sequence. Actually, PRACH preamble format 1 would provide the largest cell range, but a 3 ms total duration decreases resource block usage efficiency as it has a large overhead and limits the possibilities in terms of TDD pattern selection (at least 3 ms continuous transmission in uplink must be configured). In this light, the RA procedure according to the invention may preferably rely on an iterative mechanism based on partitions of the planned cell range into 14.5 km intervals, the maximum cell range supported by PRACH format 0.

According to the invention, the first PRACH attempt may be transmitted using a PRACH preamble sequence generated according to 3GPP TS 38.321, section 5.1.2. Subsequent attempts may preferably reuse the same PRACH preamble sequence with a different TAO until a valid Random Access Response is received. Alternatively, successive PRACH preambles may comprise a different PRACH preamble sequence in order for the transceiver equipment to be able to identify upon which PRACH preamble the base station has send an acknowledgement.

In this context, the cellular communications will schedule at least one PRACH occasion per radio frame. The interval between the transmissions of two different PRACH preambles according to the invention may be one frame. This however would lead in the worst case to a quite long time until the PRACH preamble is properly received from the base station. Therefore, it may also be possible according to the invention to transmit a train of PRACH preambles with different sequence numbers successively, separated in time by TAOs corresponding to multiples of the round trip delay in a virtual cell of lower cell radius than the real cell. The probability that one of the PRACH preambles is received in the next PRACH detection window at the base station is much higher and contribute not to lose any time for the RA procedure which may be advantageous, in particular when using power ramping. Thus, in an alternative embodiment of the iterative method according to the invention and in order to enable a very efficient RA procedure since only a minimum amount of time and frequency resources are required for testing different TAOs, the transceiver equipment may simultaneously transmit a plurality of PRACH preambles to the base station, each of said plurality of PRACH preambles being associated with a different sequence and/or TAO.

The iterative method according to the present invention is particularly advantageous for ATG communication systems in which a network of base stations on the ground (ground units) communicates with on-board units or on-board equipments of aircrafts. The cell around each base station is usually large due to the distance to cover. However, each cell has a very low density of aircrafts. In this situation one or a limited number of on-board units per aircraft may be used as gateway or customer premises equipment (CPE) to further enable communication with user terminals of the respective air users. These user terminals may be dedicated terminals communicating over WIFI with the on-board unit or communicating with a usual mobile communication standard with the on-board unit, the on-board unit converting the 5G NR signals it got in the wireless or mobile communication signal required for communication with the air users.

Thus, in a particularly preferred embodiment of the invention the method is adapted to be used for air-to-ground communications, in particular between on-board units (on-board equipment) of an aircraft and base stations on the ground (ground units). Preferably, the transceiver equipment being an on-board equipment of an aircraft or as part of an aircraft and the base station being a ground unit. Particularly preferably, the on-board equipment may ensure a gateway function with a plurality of user terminals on board of the aircraft. The communication between the on-board equipment and the user terminals may be based on WIFI or on any other wireless standards.

Like this, the iterative method according to the invention may advantageously be used to provide a 5G NR based direct air-to-ground (DATG) network with cells dedicated to serving sea or other areas in which propagation distances larger than 100 km occur, comprised of standard 5G gNodeB equipment and standard 5G onboard units carrying modified random access and/or timing advance. Preferably, the transceiver equipment and/or the base stations may further be equipped with high-gain directive antennas to support large cell ranges further.

Another subject matter of the invention is an iterative method for handover of the transceiver equipment from the base station serving the maximum cell range C (source cell) to a base station serving a maximum cell range C1 (target cell), in particular after the transceiver equipment had successfully accessed the cellular communications network by the method according to the invention, said transceiver equipment transmitting the PRACH preamble used in the method according to the invention with a Timing Advance Offset (TAO) comprising $t1_0, \ldots, th_{k-1}, t1_k, \ldots, t1_n$ ( $n \in \mathbb{N}$ ), in particular comprising an initial starting TAO $t1_0$, various preceding TAOs $t1_{k-1}$ and various $k^{th}$ TAOs $t1_k$, over a Random Access Channel to the base station serving the maximum cell range C1 ( $C1 > r \in \mathbb{R}^+$ ), the method comprising the steps of:

i. transmitting the PRACH preamble with an initial starting TAO $t1_0$, said starting TAO $t1_0$ being

1) the TAO used for the base station serving the maximum cell range C, preferably of the source cell, in particular the $k^{th}$ TAO $t_k$ as determined in the method according to the invention, preferably the TAO interval, $t_k$, containing the timing advance of the source cell of the handover, in particular if $13107.2/km * C1 * T_c \geq t_k$, or
2) calculated by the transceiver equipment depending on the maximum cell range C1, preferably of the target cell, in particular if $13107.2/km * C1 * T_c < t_k$, or
3) calculated by the transceiver equipment estimating the distance to the base station serving the maximum cell range C1, preferably of the target cell,

and optionally
ii. performing steps b1 to b3, in particular steps b1' to b3' or b1" to b3", of the method according to the invention to determine a $k^{th}$ TAO $t1_k$ being calculated by adding and/or subtracting a multiple of t as being a function of r ( $r \in \mathbb{R}^+$ ), in particular t = 13107.2 * r * $T_c$, to a preceding TAO $t1_{k-1}$ until a valid Random Access Response is being received.

Thus, for handover cause, the TAO search or pre-alignment procedure starts with an initial starting TAO $t1_0$ from 1), 2) or 3).

According to 1), the TAO search or pre-alignment procedure starts with the TAO interval containing the current timing advance of the serving cell, in particular $t1_0$ corresponds to the TAO interval, $t_k$, containing the timing advance of the source cell of the handover. This is valid, if the target cell has a planned cell radius higher or equal to the equivalent distance of the current TAO of the serving cell, i.e. if 13107.2/km * C1 * $T_c \geq t_k$ (5G/NR) or if 204.8/km * C1 * $T_s \geq t_k$ (4G/LTE). Substantially, $t_k$ may be the value calculated by the method according to the invention for accessing the cellular communications network, preferably being adapted by timing advance command included in the Random Access Response. Alternatively, $t_k$ may not longer be the value calculated by the method according to the invention for accessing the cellular communications network, since the aircraft has already been moved and the current timing advance of the source cell has changed now.

Otherwise and according to 2), i.e. if 13107.2/km * C1 * $T_c < t_k$ (5G/NR) or if 204.8/km * C1 * $T_s < t_k$ (4G/LTE) the starting point may be calculated by the transceiver equipment depending on the maximum cell range C1 of the target cell. In particular, the starting point may be the mid-point of the cell range C1 of the target cell.

The reasoning for this is as follows: For an intra-gNodeB handover (C = C1), the UE/OBE uplink timing is the same in the source and target cells. Thus, the search starts with the TAO interval that contains the current timing advance of the serving cell. For an inter-gNodeB handover, assuming a pure line-of-sight-scenario, the aircraft is about halfway between the source and target gNodeBs, assuming the same power setting on both source and target cell. For both cases, the TAO to be used in the target cell should be close to the one used in the source cell.

Alternatively and according to 3), in case of an inter-gNodeB handover, the starting point will be determined by the UE/OBE, in particular $t1_0$ is calculated by the transceiver equipment estimating the distance to the base station serving the maximum cell range C1 of the target cell. As the 5G air-to-ground system implementation is based on TDD and the system is time-synchronized, the UE/OBE will know when the SS/PBCH blocks are transmitted by the gNodeB from its timing advance information. Consequently, based on the time difference between its own SS/PBCH block and the ones from the measured neighbours, it will be able to estimate how far the measured neighbours are and select the most appropriate TAO interval to start its search, containing the estimated neighbour distance. In this context, SS/PBCH blocks are understood to mean Synchronizations Signal (SS) and Physical Broadcast Channel (PBCH) used for cell signal measurement. Thus, according to 3), $t1_0$ is preferably calculated by the transceiver equipment estimating the distance to the base station serving the maximum cell range C1 of the target cell by analysing the time difference between SS/PBCH blocks sent by the base station.

Then, preferably after $t1_0$ is found, the $k^{th}$ TAO ( $k \in \mathbb{N}$ ) is determined using the mechanism according to the invention, preferably an alternation around the starting point according to method steps b1' to b3' and/or b1" to b3". If the TAO search or pre-alignment procedure reaches either the maximum or the minimum TAO values, the procedure carries on until the entire TAO search range of the target cell is covered. Thus, in a particularly preferred embodiment of the iterative method for handover, step ii is carried on, if the preceding TAO $tl_{k-1} = 0$ or $t1_{k-1} = 13107.2 * (C-r) * T_c$ (5G/NR), or alternatively $t1_{k-1} = 204.8 * (C-r) * T_s$ (4G/LTE). Moreover, a subject matter of the invention is a transceiver equipment, in particular a UE or OBE, configured to access a cellular communications network, preferably adhering to the 5G New Radio standard, or for handover from a base station serving a maximum cell range C (source cell) to a base station serving a maximum cell range C1 (target cell), for carrying out the iterative method according to the invention. In particular, the transceiver equipment comprises

- means for transmitting a PRACH preamble with a Timing Advance Offset (TAO) over a Random Access Channel to a base station serving a maximum cell range C and/or C1, said PRACH preamble being a long sequence PRACH preamble supporting a cell range of r kilometres which is less than the maximum cell range C and/or C1,
- means for determining the maximum cell range C and/or C1,
- means for calculating an initial starting TAO $t_0/t1_0$ depending on the maximum cell range C and/or C1 and for calculating a $k^{th}$ TAO $t_k/t1_k$ by adding and/or subtracting a multiple of t as being a function of r, in particular t = 13107.2 * r * $T_c$ (5G/NR) or t = 204.8 * r * $T_s$ (4G/LTE), to a preceding TAO $t_{k-1}/t1_{k-1}$,
- means for determining if a valid Random Access Response is received within a predetermined waiting interval.

Like this, the transceiver equipment according to the invention preferably comprises a receiving module adapted to receive radio communication signal according to a radio communication standard as 5G NR and/or a transmit module, in particular a PRACH module, responsible for transmitting PRACH preambles for accessing the cellular communications network. The PRACH module uses long PRACH sequences as for example PRACH preamble format 0 as defined by 3GPP although the corresponding base station is in the middle of a large cell which would actually require a different PRACH preamble format according to the standard.

The transmit module may further comprise means for selecting an initial TAO for issuing the first PRACH preamble as well as means for calculating subsequent TAOs for subsequent transmit of the PRACH preamble. The means for sending a PRACH preamble may further select, preferably randomly select, a sequence to be included in the PRACH preamble among a set of predefined sequences, in particular as foreseen in 5G NR standard. In addition, the transmit module may comprise means for checking if an acknowledgement of the PRACH preamble has been received from the base station in order to determine if additional PRACH preambles have to be transmitted or if the transmission of additional PRACH preambles can be stopped.

In a preferred embodiment, the transceiver equipment is an on-board unit in an aircraft, in particular as a part of an aircraft, said on-board unit preferably acting as a gateway for further traffic distribution to user equipments on board of the aircraft. In particular, the transceiver equipment is acting as a CPE responsible for aggregating the data flows of several users on board of the aircraft. The users on-board communicating are preferably using a wireless communication scheme as WIFI or any other appropriate wired communication with an on-board communication controller. The on board communication controller may further comprise a gateway function aggregating/disaggregating on-board data and for converting the on-board used communication scheme to the ATG used communication scheme and vice versa.

Particularly preferably, at least one, preferably one to ten, most preferably two or three, on-board equipment would be available per aircraft. In this context, it is understood that not only aircraft could carry an on-board equipment implementing the features of a transceiver equipment according to the invention, but any other moving vehicle gathering several terminals on-board could be adapted to carry an on-board unit according to the invention. Alternatively, it will however be understood that the transceiver equipment according to the invention could also be a simple user equipment.

Another subject matter of the invention is a computer program product comprising instruction which, when the program is executed by a computer, cause the computer to carry out the iterative method according to the invention.

Likewise, a subject matter of the invention is a data carrier signal carrying the computer program product.

If applicable, the functions of the various technical elements according to the invention may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

The invention is illustrated by the figures in more detail without limiting the invention to these exemplary embodiments. They show:

**Fig. 1:** an iterative method according to the invention comprising steps a. to d.

**Fig. 2a,b:** a TAO search or pre-alignment procedure according to the invention starting from the mid-point of the cell.

**Fig. 3:** a TAO search or pre-alignment procedure according to the invention in case of handover to the target cell starting from the current TAO of the serving cell.

**Fig. 4:** a RA procedure according to the invention including transmission of several PRACH preambles

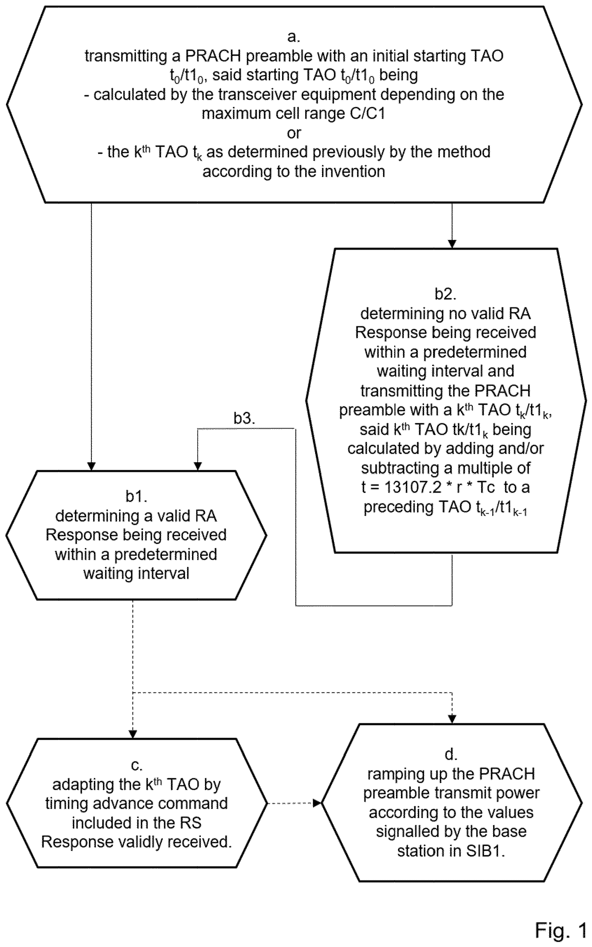

**Figure 1** discloses an iterative method for accessing a cellular communications network, in particular adhering to the 5G New Radio standard, by a UE or OBE or for handover of the UE or OBE from a serving cell to a target cell in the cellular communications network, the UE or OBE transmitting at least one PRACH preamble with a TAO over a RA Channel to a base station serving a maximum cell range C (serving cell) or to a base station serving a maximum cell range C1 (target cell). The method comprises the steps of:

a. transmitting the PRACH preamble with an initial starting TAO $t_0/t1_0$, said starting TAO $t_0/t1_0$ being calculated by the transceiver equipment depending on the maximum cell range C/C1 or being the $k^{th}$ TAO $t_k$ of the serving cell as determined previously, and

b1. determining a valid RA Response being received within a predetermined waiting interval, or

b2. determining no valid RA Response being received within a predetermined waiting interval and transmitting the PRACH preamble with a $k^{th}$ TAO $t_k/t1_k$, said $k^{th}$ TAO $t_k/t1_k$ being calculated by adding and/or subtracting a multiple of $t = 13107.2 * r * T_c$ to a preceding TAO $t_{k-1}/t1_{k-1}$, and

b3. repeating steps b1 and b2 until a valid RA Response is being received.

Further, the method may optionally comprise the steps

c. adapting the $k^{th}$ TAO by timing advance command included in the RA Response validly received, and/or

d. ramping up the PRACH preamble transmit power according to the values signalled by the base station in SIB1.

Like this, the RA procedure according to the invention correspond to a partitioning of the maximum cell range C/C1 into chunks representing intervals of r kilometres, for example intervals of ca. 14.5 km for PRACH preamble format 0. These serve as hypotheses of the location of the transceiver equipment within the cell which are tested by PRACH transmissions. Thus, the method foresees that if a PRACH preamble transmitted by the transceiver equipment with TAO = $t_{k-1}/t1_{k-1}$ does not get a valid RA Response, the PRACH preamble is transmitted again using a $k^{th}$ TAO = $t_k/t1_k$ ($t_k \neq t_{k-1}$ and/or $t1_k \neq t1_{k-1}$). In this context, the respective $k^{th}$ TAO represents one interval of r kilometres, for example the interval from 14.5 km to 29 km.

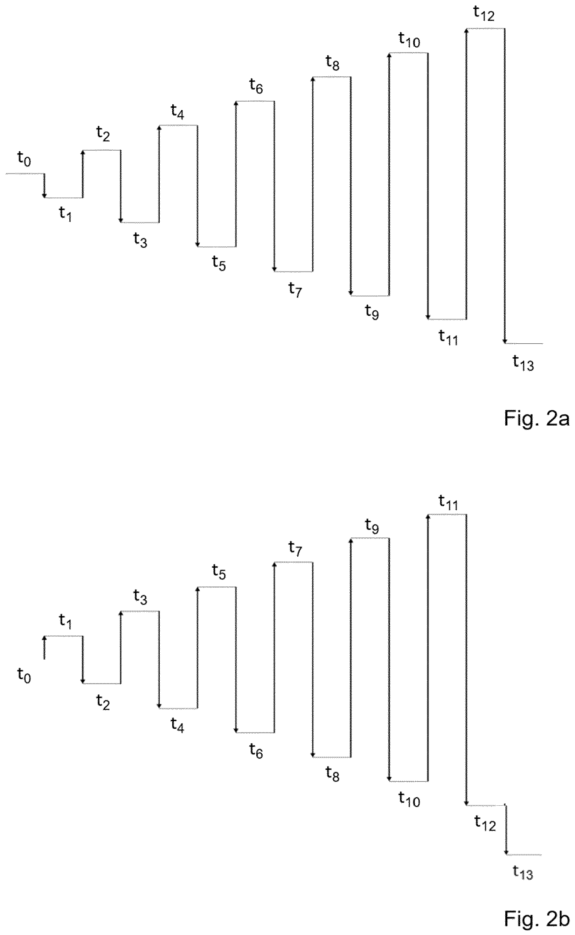

**Figures 2a and 2b** disclose a RA procedure according to the invention with optimized TAO search mechanism using an alternation around the mid-point (here: 101.5 km) of the maximum cell range C (here: 203 km).

In doing so, **Figure 2a** shows an iterative method according to the invention comprising steps b1' to b3' instead of steps b1 to b3. Thus, the subsequent PRACH preamble transmissions alternates from the initial starting TAO $t_0$ in increments of t = 190464 $T_c$ with lower TAOs first. The corresponding values for $t_0$ to $t_{13}$ are as follows:

| | TAO* | $T_A$* | Interval | |
|---|---|---|---|---|
| $t_0$ | 1333248 $T_c$ | 2604 | ca. 101.5 km | ca. 116.0 km |
| $t_1$ | 1142784 $T_c$ | 2232 | ca. 87.0 km | ca. 101.5 km |
| $t_2$ | 1523712 $T_c$ | 2976 | ca. 116.0 km | ca. 130.5 km |
| $t_3$ | 952320 $T_c$ | 1860 | ca. 72.5 km | ca. 87.0 km |
| $t_4$ | 1714176 $T_c$ | 3348 | ca. 130.5 km | ca. 145.0 km |
| $t_5$ | 761856 $T_c$ | 1488 | ca. 58.0 km | ca. 72.5 km |
| $t_6$ | 1904640 $T_c$ | 3720 | ca. 145.0 km | ca. 159.5 km |
| $t_7$ | 571392 $T_c$ | 1116 | ca. 43.5 km | ca. 58.0 km |
| $t_8$ | 2095104 $T_c$ | 4092 | ca. 159.5 km | ca. 174.0 km |
| $t_9$ | 380928 $T_c$ | 744 | ca. 29.0 km | ca. 43.5 km |
| $t_{10}$ | 2285568 $T_c$ | 4464 | ca. 174.0 km | ca. 188.5 km |
| $t_{11}$ | 190464 $T_c$ | 372 | ca. 14.5 km | ca. 29.0 km |
| $t_{12}$ | 2473984 $T_c$ | 4832 | ca. 188.5 km | ca. 203.0 km |
| $t_{13}$ | 0 $T_c$ | 0 | 0 km | ca. 14.5 km |
| * calculated for 5G NR ($\mu$ = 1). | | | | |

Accordingly, **Figure 2b** shows an iterative method according to the invention comprising steps b1" to b3" instead of steps b1 to b3. Thus, the subsequent PRACH preamble transmissions alternates from the initial starting TAO $t_0$ in increments of t = 190464 $T_c$ with higher TAOs first. The corresponding values for $t_0$ to $t_{13}$ are as follows:

| | TAO* | $T_A$* | Interval | |
|---|---|---|---|---|
| $t_0$ | 1333248 $T_c$ | 2604 | ca. 101.5 km | ca. 116.0 km |
| $t_1$ | 1523712 $T_c$ | 2976 | ca. 116.0 km | ca. 130.5 km |
| $t_2$ | 1142784 $T_c$ | 2232 | ca. 87.0 km | ca. 101.5 km |
| $t_3$ | 1714176 $T_c$ | 3348 | ca. 130.5 km | ca. 145.0 km |
| $t_4$ | 952320 $T_c$ | 1860 | ca. 72.5 km | ca. 87.0 km |
| $t_5$ | 1904640 $T_c$ | 3720 | ca. 145.0 km | ca. 159.5 km |
| $t_6$ | 761856 $T_c$ | 1488 | ca. 58.0 km | ca. 72.5 km |
| $t_7$ | 2095104 $T_c$ | 4092 | ca. 159.5 km | ca. 174.0 km |
| $t_8$ | 571392 $T_c$ | 1116 | ca. 43.5 km | ca. 58.0 km |
| $t_9$ | 2285568 $T_c$ | 4464 | ca. 174.0 km | ca. 188.5 km |
| $t_{10}$ | 380928 $T_c$ | 744 | ca. 29.0 km | ca. 43.5 km |

(continued)

|  | TAO* | $T_A$* | Interval | |
|---|---|---|---|---|
| $t_{11}$ | 2473984 $T_c$ | 4832 | ca. 188.5 km | ca. 203.0 km |
| $t_{12}$ | 190464 $T_c$ | 372 | ca. 14.5 km | ca. 29.0 km |
| $t_{13}$ | 0 $T_c$ | 0 | 0 km | ca. 14.5 km |
| * calculated for 5G NR ($\mu = 1$). | | | | |

If the TAO search reaches either the maximum or the minimum TAOs, the RA procedure carries on until the entire TAO search range is covered.

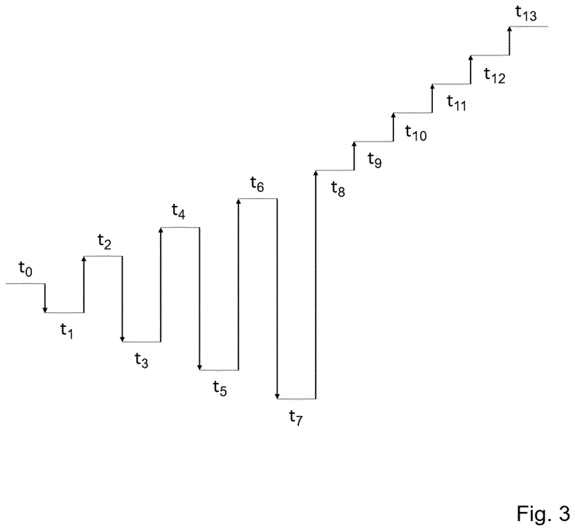

Figure 3 discloses a RA procedure according to the invention during handover from a source cell with a distance to the source gNodeB of ca. 70 km to a target cell having a maximum cell range C1 (here: 203 km). The TAO search starts with the TAO interval that contains the current TAO of the serving cell and is continued with optimized TAO search mechanism using an alternation around the point corresponding to the current TAO $t_k$ (here: 761856 $T_c$). If the TAO search reaches either the maximum or the minimum TAO (here: 0 $T_c$), the procedure carries on until the entire TAO search range of the target cell is covered.

|  | TAO | $T_A$ | Interval | |
|---|---|---|---|---|
| $t_0$ | 761856 $T_c$ | 1488 | ca. 58.0 km | ca. 72.5 km |
| $t_1$ | 571392 $T_c$ | 1116 | ca. 43.5 km | ca. 58.0 km |
| $t_2$ | 952320 $T_c$ | 1860 | ca. 72.5 km | ca. 87.0 km |
| $t_3$ | 380928 $T_c$ | 744 | ca. 29.0 km | ca. 43.5 km |
| $t_4$ | 1142784 $T_c$ | 2232 | ca. 87.0 km | ca. 101.5 km |
| $t_5$ | 190464 $T_c$ | 372 | ca. 14.5 km | ca. 29.0 km |
| $t_6$ | 1333248 $T_c$ | 2604 | ca. 101.5 km | ca. 116.0 km |
| $t_7$ | 0 $T_c$ | 0 | 0 km | ca. 14.5 km |
| $t_8$ | 1523712 $T_c$ | 2976 | ca. 116.0 km | ca. 130.5 km |
| $t_9$ | 1714176 $T_c$ | 3348 | ca. 130.5 km | ca. 145.0 km |
| $t_{10}$ | 1904640 $T_c$ | 3720 | ca. 145.0 km | ca. 159.5 km |
| $t_{11}$ | 2095104 $T_c$ | 4092 | ca. 159.5 km | ca. 174.0 km |
| $t_{12}$ | 2285568 $T_c$ | 4464 | ca. 174.0 km | ca. 188.5 km |
| $t_{13}$ | 2473984 $T_c$ | 4832 | ca. 188.5 km | ca. 203.0 km |
| * calculated for 5G NR ($\mu = 1$). | | | | |

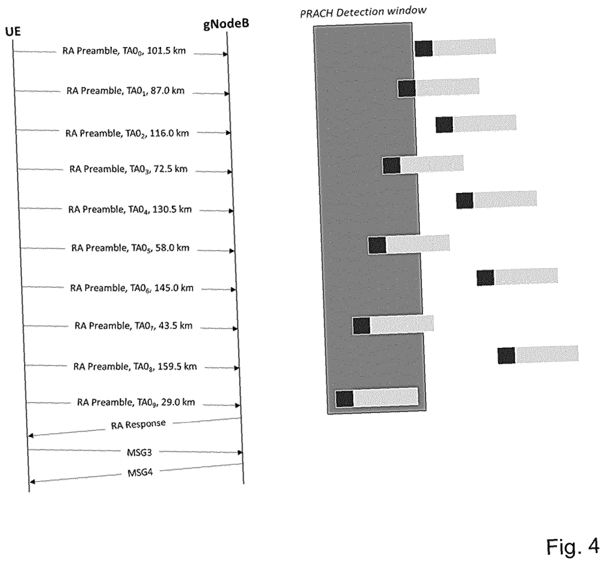

**Figure 4** discloses message exchange for the RA procedure according to the invention including transmission of several PRACH preambles (MSG1). The RA procedure according to the invention relies on the assumption that the gNodeB will send the RA Response (MSG2) as a reply to a PRACH preamble that arrived wholly within the PRACH detection window. For a UE or OBE located at 30 km in a cell with a planned 200 km cell range, the TAOs used for a PRACH preamble of PRACH preamble format 0 correspond to the following distances:

| TAO | $t_0$ | $t_1$ | $t_2$ | $t_3$ | $t_4$ | $t_5$ | $t_6$ | $t_7$ | $t_8$ | $t_9$ |
|---|---|---|---|---|---|---|---|---|---|---|
| distance [km] | 101.5 | 87.0 | 116.0 | 72.5 | 130.5 | 58.0 | 145.0 | 43.5 | 159.5 | 29.0 |

As MSG1 with TAO = $t_9$ corresponding to the interval of 29.0 km to 43.5 km wholly arrives within the PRACH detection window, gNodeB sends MSG2. The UE or OBE then transmits a scheduled transmission message (MSG3). If the transceiver equipment considers the contention resolution successful by receiving contention resolution message (MSG4), the RA procedure is completed.

**Claims**

1. Iterative method for accessing a cellular communications network by a transceiver equipment, said transceiver equipment transmitting at least one PRACH preamble with a Timing Advance Offset, TAO, comprising $t_0, ..., t_{k-1}, t_k, ...,$ $t_n$ over a Random Access Channel to a base station serving a maximum cell range C, said PRACH preamble being a long sequence PRACH preamble supporting a cell range of r kilometres which is less than the maximum cell range C, wherein the method comprises the steps of:

   a. transmitting the PRACH preamble with an initial starting TAO $t_0$, said starting TAO $t_0$ being calculated by the transceiver equipment depending on the maximum cell range C, and
   b1. determining whether a valid Random Access Response is received within a predetermined waiting interval,
   b2. if no valid Random Access Response is received within a predetermined waiting interval, transmitting the PRACH preamble with a $k^{th}$ TAO $t_k$, said $k^{th}$ TAO $t_k$ being calculated by adding and/or subtracting a multiple of t as being a function of r to a preceding TAO $t_{k-1}$, and
   b3. repeating steps b1 and b2 until a valid Random Access Response is being received.

2. Iterative method according to claim 1, **characterised in that**
   the initial starting TAO $t_0$ corresponds with the mid-point of the maximum cell range C.

3. Iterative method according to claim 1 or 2, **characterised in that**
   the initial starting TAO $t_0$ is calculated by the transceiver equipment using information on a default uplink-downlink configuration provided by the base station to determine the maximum cell range C, said default uplink-downlink configuration including reference subcarrier spacing and at least one slot pattern.

4. Iterative method according to claim 3, **characterised in that**
   the maximum cell range C is determined from the total duration of flexible OFDM symbols comprised by the at least one slot pattern, the total duration being calculated considering number of the OFDM flexible symbols and the reference subcarrier spacing.

5. Iterative method according to claim 1, **characterised in that**
   the $k^{th}$ TAO $t_k$ is calculated by adding or subtracting a multiple of $t = 13107.2 * r * T_c$ to a preceding TAO $t_{k-1}$, wherein Tc is the basic time unit in 5G NR and as per 3GPP TS 38.211 can be expressed as $1/(480 * 103 * 4096) * 106 \mu s = 100/196608 \mu s$ [corresponds to 0.509 ns].

6. Iterative method according any one of claims 1 to 5, **characterised in that** steps b1 to b3 are performed as steps

   b1'. determining whether a valid Random Access Response is received within a predetermined waiting interval, or
   b2'. no valid Random Access Response is received within a predetermined waiting interval, transmitting the PRACH preamble with a $k^{th}$ TAO $t_k$, where $t_k = t_{k-1} + (-1)^k \cdot kt$ with $t = 13107.2 * r * T_c$, and
   b3'. repeating steps b1' and b2' until a valid Random Access Response is being received,
   or
   b1". determining whether a valid Random Access Response is received within a predetermined waiting interval,
   b2". if no valid Random Access Response is received within a predetermined waiting interval, transmitting the PRACH preamble with a $k^{th}$ TAO $t_k$, where $t_k = t_{k-1} + (-1)^{k-1} \cdot kt$ with $t = 13107.2 * r * T_c$, and
   b3". repeating steps b1" and b2" until a valid Random Access Response is being received,

   wherein Tc is the basic time unit in 5G NR and as per 3GPP TS 38.211 can be expressed as $1/(480 * 103 * 4096) * 106 \mu s = 100/196608 \mu s$ [corresponds to 0.509 ns].

7. Iterative method according to any one of claims 1 to 6, **characterised in that**
   the PRACH preamble is detected in a PRACH detection window at the base station and the Random Access Response is transmitted by the base station if the PRACH preamble having wholly been arrived within the PRACH detection window.

8. Iterative method according to any one of claim 1 to 7, **characterised in that**
   the PRACH preamble is a long sequence PRACH preamble of PRACH format 0 according to 3GPP communications standard, TS 38.211.

9. Iterative method according to any one of claims 1 to 8, **characterised in** being adapted to be used for air-to-ground communications, in particular the transceiver equipment being an on-board equipment of an aircraft and the base station being a ground unit.

10. Iterative method for handover of a transceiver equipment from a base station serving the maximum cell range C to a base station serving a maximum cell range C1, said transceiver equipment transmitting the PRACH preamble, said PRACH preamble being a long sequence PRACH preamble supporting a cell range of r kilometres which is less than the maximum cell range C, with a Timing Advance Offset, TAO, comprising $t1_0$, ..., $t1_{k-1}$, $t1_k$, ..., $t1_n$ over a Random Access Channel to the base station serving the maximum cell range C1, wherein the method comprises the steps of:

> i. transmitting the PRACH preamble with an initial starting TAO $t1_0$, said starting TAO $t1_0$ being
>
> > 1) the TAO used for the base station serving the maximum cell range C, in particular the $k^{th}$ TAO $t_k$ wherein $t_k$ is determined by performing the method according to any one of claims 1 to 9, or
> > 2) calculated by the transceiver equipment depending on the maximum cell range C1, or
> > 3) calculated by the transceiver equipment estimating the distance to the base station serving the maximum cell range C1,
>
> and ii. performing steps b1 to b3 of the method according to claim 1, in particular steps b1' to b3' or b1" to b3", of the method according to claim 6 until a valid Random Access Response is being received.

11. Iterative method according to claim 10, **characterised in that**

> step ii is carried on, if the preceding TAO $t1_{k-1} = 0$ or $t1_{k-1} = 13107.2 * (C - r) * T_c$,
> wherein Tc is the basic time unit in 5G NR and as per 3GPP TS 38.211 can be expressed as $1/(480 * 103 * 4096) * 106$ μs $= 100/196608$ μs [corresponds to 0.509 ns].

12. Transceiver equipment configured to access a cellular communications network or for handover from a base station serving a maximum cell range C to a base station serving a maximum cell range C1, said transceiver equipment comprising

> - means for carrying out the iterative method according to any one of claims 1 to 9 and/or according to claim 10 or 11.

13. Transceiver equipment according to claim 12, **characterised in**
being an on-board equipment in an aircraft, said on-board equipment acting as a gateway for further traffic distribution to user equipments on board of the aircraft.

14. Computer program product comprising instructions which, when the program is executed by a transceiver equipment, cause the transceiver equipment to carry out the iterative method according to any one of claims 1 to 9 and/or according to claim 10 or 11.

15. Data carrier signal carrying the computer program product of claim 14.


**Patentansprüche**

1. Iteratives Verfahren für den Zugriff auf ein zellulares Kommunikationsnetzwerk durch ein Sender-Empfänger-Gerät, wobei das Sender-Empfänger-Gerät mindestens eine PRACH-Präambel mit einem Timing Advance Zeitversatz, TAO, umfassend $t_0$, ..., $t_{k-1}$, $t_k$, ..., $t_n$ über einen Random-Access-Channel zu einer Basisstation mit maximaler Zellreichweite C sendet, wobei die PRACH-Präambel eine PRACH-Präambel mit langer Sequenz ist, die eine Zellreichweite von r Kilometern unterstützt, die kleiner als maximale Zellreichweite C ist,
wobei das Verfahren die folgenden Schritte umfasst:

> a. Übertragen der PRACH-Präambel mit einem anfänglichen Start-TAO $t_0$, wobei der Start-TAO $t_{(0)}$ von dem Sender-Empfänger-Gerät in Abhängigkeit von dem maximalen Zellbereich C berechnet wird, und
> b1. Feststellung, ob eine gültige Random-Access Antwort innerhalb eines vorbestimmten Warteintervalls empfangen wird,

b2. wenn innerhalb eines vorbestimmten Warteintervalls keine gültige Random Access Antwort empfangen wird, Übertragung der PRACH-Präambel mit einem $k^{ten}$ TAO $t_k$, wobei das $k^{te}$ TAO $t_k$ durch Addieren und/oder Subtrahieren eines Vielfachen von t als Funktion von r zu einem vorhergehenden TAO $t_{k-1}$ berechnet wird, und

b3. Wiederholung der Schritte b1 und b2, bis eine gültige Random-Access Antwort empfangen wird.

2. Iteratives Verfahren nach Anspruch 1, **dadurch gekennzeichnet, dass**
   das anfängliche Start-TAO $t_0$ dem Mittelpunkt des maximalen Zellbereichs C entspricht.

3. Iteratives Verfahren nach Anspruch 1 oder 2, **dadurch gekennzeichnet, dass**
   der anfängliche Start-TAO $t_0$ von dem Sender-Empfänger-Gerät unter Verwendung von Informationen über eine Standard Uplink-Downlink-Konfiguration berechnet wird, die von der Basisstation bereitgestellt wird, um den maximalen Zellbereich C zu bestimmen, wobei die Standard Uplink-Downlink-Konfiguration Referenz Subcarrier-Spacing und mindestens ein Slot-Muster enthält.

4. Iteratives Verfahren nach Anspruch 3, **dadurch gekennzeichnet, dass**
   der maximale Zellbereich C aus der Gesamtdauer der flexiblen OFDM Symbole bestimmt wird, die von dem mindestens einen Slot-Muster umfasst werden, wobei die Gesamtdauer unter Berücksichtigung der Anzahl der flexiblen OFDM Symbole und des Referenz Subcarrier-Spacing berechnet wird.

5. Iteratives Verfahren nach Anspruch 1, **dadurch gekennzeichnet, dass**
   das $k^{te}$ TAO $t_k$ wird berechnet, indem ein Vielfaches von $t = 13107,2 * r * T_c$ zu einem vorhergehenden TAO $t_{k-1}$ addiert oder subtrahiert wird, wobei $T_c$ die grundlegende Zeiteinheit in 5G NR ist und gemäß 3GPP TS 38.211 als $1/(480 * 103 * 4096) * 106$ $\mu$s $= 100/196608$ $\mu$s [entspricht 0,509 ns] ausgedrückt werden kann.

6. Iteratives Verfahren nach einem der Ansprüche 1 bis 5, **dadurch gekennzeichnet, dass** die Schritte b1 bis b3 durchgeführt werden als Schritte

   b1'. Feststellung, ob eine gültige Random-Access Antwort innerhalb eines vorbestimmten Warteintervalls empfangen wird,
   b2'. wenn innerhalb eines vorbestimmten Warteintervalls keine gültige Random Access Antwort empfangen wird, Übertragung der PRACH-Präambel mit einem $k^{ten}$ TAO $t_k$, wobei $t_k = t_{k-1} + (-1)^{(k)}$-kt mit $t = 13107,2 * r * T_c$, und
   b3'. Wiederholung der Schritte b1' und b2', bis eine gültige Random-Access Antwort empfangen wird,
   oder
   b1". Feststellung, ob eine gültige Random-Access Antwort innerhalb eines vorbestimmten Warteintervalls empfangen wird,
   b2". wenn innerhalb eines vorbestimmten Warteintervalls keine gültige Random-Access Antwort empfangen wird, Übertragung der PRACH-Präambel mit einem $k^{th}$ TAO $t_k$, wobei $t_k = t_{k-1} + (-1)^{k-1}$· kt mit $t = 13107,2 * r * T_c$, und
   b3". Wiederholung der Schritte b1" und b2", bis eine gültige Random Access Antwort empfangen wird,

   wobei $T_c$ die Basiszeiteinheit in 5G NR ist und gemäß 3GPP TS 38.211 sein kann ausgedrückt als $1/(480 * 103 * 4096) * 106$ $\mu$s $= 100/196608$ $\mu$s [entspricht 0,509 ns].

7. Iteratives Verfahren nach einem der Ansprüche 1 bis 6, **dadurch gekennzeichnet, dass** die PRACH-Präambel in einem PRACH-Erkennungsfenster an der Basisstation erkannt wird und die Random-Access Antwort von der Basisstation gesendet wird, wenn die PRACH-Präambel vollständig innerhalb des PRACH-Erkennungsfensters angekommen ist.

8. Iteratives Verfahren nach einem der Ansprüche 1 bis 7, **dadurch gekennzeichnet, dass** die PRACH-Präambel ist eine PRACH-Präambel mit langer Sequenz im PRACH-Format 0 gemäß dem 3GPP-Kommunikationsstandard TS 38.211.

9. Iteratives Verfahren nach einem der Ansprüche 1 bis 8, **dadurch gekennzeichnet, dass** es für die Luft-Boden-Kommunikation eingesetzt werden kann, wobei insbesondere das Sender-Empfänger-Gerät ein Bordgerät eines Flugzeugs und die Basisstation eine Bodeneinheit ist.

10. Iteratives Verfahren zur Übergabe eines Sender-Empfänger-Gerätes von einer Basisstation mit maximaler Zellreichweite C zu einer Basisstation mit maximaler Funkzellenreichweite C1, wobei das Sender-Empfänger-Gerät die PRACH-Präambel, die eine PRACH-Präambel mit langer Sequenz ist, die eine Zellreichweite von r Kilometern unterstützt, was kleiner als die maximale Zellreichweite C ist, mit einem Timing-Advance Zeitversatz , TAO, sendet, umfassend

$t1_0$, ..., $t1_{k-1}$, $t1_k$, ..., $t1_n$ über einen Random-Access Channel zu der Basisstation mit maximaler Zellenreichweite C1,
wobei das Verfahren die folgenden Schritte umfasst:

i. Übertragen der PRACH-Präambel mit einem anfänglichen Start-TAO $t1_0$,
wobei der Start-TAO $t1_0$ ist

1) das für die Basisstation mit maximaler Funkzellenreichweite C verwendete TAO, insbesondere das $k^{te}$ TAO $t_k$, wobei $t_k$ durch Durchführung des Verfahrens nach einem der Ansprüche 1 bis 9 bestimmt wird, oder
2) das vom Sender-Empfänger-Gerät in Abhängigkeit vom maximalen Zellbereich C1 berechnete, oder
3) das von dem Sender-Empfänger-Gerät berechnete, das die Entfernung zu der Basisstation mit maximaler Funkzellenreichweite C1 abschätzt,

und
ii. Durchführen der Schritte b1 bis b3 des Verfahrens nach Anspruch 1, insbesondere der Schritte b1' bis b3' oder b1" bis b3", des Verfahrens nach Anspruch 6, bis eine gültige Random-Access Antwort empfangen wird.

11. Iteratives Verfahren nach Anspruch 10, **dadurch gekennzeichnet, dass**
Schritt ii. fortgesetzt wird, wenn das vorhergehende TAO $t1_{k-1} = 0$ oder $t1_{k-1} = 13107{,}2 * (C - r) * T_c$, wobei $T_c$ die grundlegende Zeiteinheit in 5G NR ist und gemäß 3GPP TS 38.211 als $1/(480 * 103 * 4096) * 106 \mu s = 100/196608 \mu s$ [entspricht 0,509 ns] ausgedrückt werden kann.

12. Sender-Empfänger-Gerät, das für den Zugang zu einem zellularen Kommunikationsnetzwerk oder für die Übergabe von einer Basisstation mit maximaler Zellenreichweite C zu einer Basisstation mit maximaler Zellenreichweite C1 konfiguriert ist, wobei das Sender-Empfänger-Gerät umfasst

- Mittel zur Durchführung des iterativen Verfahrens nach einem der Ansprüche 1 bis 9 und/oder nach Anspruch 10 oder 11.

13. Sender-Empfänger-Gerät nach Anspruch 12, **dadurch gekennzeichnet, dass**
es ein Bordgerät in einem Flugzeug ist, wobei das Bordgerät als Gateway für die weitere Verteilung des Datenverkehrs an Benutzergeräte an Bord des Flugzeugs dient.

14. Computerprogrammprodukt mit Anweisungen, die, wenn das Programm von einem Sender-Empfänger-Gerät ausgeführt wird, das Sender-Empfänger-Gerät veranlassen, das iterative Verfahren nach einem der Ansprüche 1 bis 9 und/oder nach Anspruch 10 oder 11 auszuführen.

15. Datenträgersignal, das das Computerprogrammprodukt nach Anspruch 14 trägt.

**Revendications**

1. Méthode itérative d'accès à un réseau de communication cellulaire par un équipement émetteur-récepteur, ledit équipement émetteur-récepteur transmettant au moins un préambule PRACH avec un décalage d'avance temporelle (Timing Advance Offset), TAO, comprenant $t_0$, ..., $t_{k-1}$, $t_k$, ..., $t_n$ sur un canal d'accès aléatoire à une station de base desservant une portée cellulaire maximale C, ledit préambule PRACH étant un préambule PRACH à longue séquence prenant en charge une portée cellulaire de r kilomètres, qui est inférieure à la portée cellulaire maximale C,
la méthode comprenant les étapes ci-après :

a. la transmission du préambule PRACH avec un TAO $t_0$ initial, ledit TAO $t_0$ initial étant calculé par l'équipement émetteur-récepteur en fonction de la portée cellulaire maximale C, et
b1. la détermination de savoir si une réponse d'accès aléatoire (Random Access Response) valide est reçue dans un intervalle d'attente prédéterminé,

b2. si aucune réponse d'accès aléatoire valide n'est reçue dans un intervalle d'attente prédéterminé, la transmission du préambule PRACH avec un $k^{th}$ TAO $t_k$, ledit $k^{th}$ TAO $t_k$ étant calculé en ajoutant et/ou en soustrayant un multiple de t comme étant une fonction de r à un TAO $t_{k-1}$ précédent, et

b3. la répétition des étapes b1 et b2 jusqu'à la réception d'une réponse d'accès aléatoire valide.

2. Méthode itérative selon la revendication 1, **caractérisée en ce que**
le TAO $t_0$ initial correspond au point médian de la portée cellulaire maximale C.

3. Méthode itérative selon la revendication 1 ou 2, **caractérisée en ce que**
le TAO $t_0$ initial est calculé par l'équipement émetteur-récepteur à l'aide d'informations sur une configuration par défaut de la liaison montante-descendante fournie par la station de base pour déterminer la portée cellulaire maximale C, ladite configuration par défaut de la liaison montante-descendante comprenant un espacement de référence entre les sous-porteuses et au moins une configuration de créneaux.

4. Méthode itérative selon la revendication 3, **caractérisée en ce que**
la portée cellulaire maximale C est déterminée à partir de la durée totale des symboles OFDM flexibles compris dans l'au moins une configuration de créneau, la durée totale étant calculée compte tenu du nombre de symboles OFDM flexibles et de l'espacement des sous-porteuses de référence.

5. Méthode itérative selon la revendication 1, **caractérisée en ce que**
le $k^{th}$ TAO $t_k$ est calculé en ajoutant ou en soustrayant un multiple de $t = 13107.2 * r * T_c$ à un TAO $t_{k-1}$ précédent, $T_c$ étant l'unité de temps de base en 5G NR et, conformément à 3GPP TS 38.211, pouvant être exprimé comme $1/(480 * 103 * 4096) * 106$ $\mu$s $= 100/196608$ $\mu$s [ce qui correspond à 0,509 ns].

6. Méthode itérative selon l'une des revendications 1 à 5, **caractérisée en ce que** les étapes b1 à b3 sont réalisées comme les étapes ci-après :

b1'. la détermination de savoir si une réponse d'accès aléatoire (Random Access Response) valide est reçue dans un intervalle d'attente prédéterminé,

b2'. si aucune réponse d'accès aléatoire valide n'est reçue dans un intervalle d'attente prédéterminé, la transmission du préambule PRACH avec un $k^{th}$ TAO $t_k$, $t_k = t_{k-1} + (-1)^k \cdot kt$ avec $t = 13107.2 * r * T_c$, et

b3'. la répétition des étapes b1' et b2' jusqu'à la réception d'une réponse d'accès aléatoire valide,
ou

b1". la détermination de savoir si une réponse d'accès aléatoire (Random Access Response) valide est reçue dans un intervalle d'attente prédéterminé,

b2". si aucune réponse d'accès aléatoire valide n'est reçue dans un intervalle d'attente prédéterminé, la transmission du préambule PRACH avec un $k^{th}$ TAO $t_k$, $t_k = t_{k-1} + (-1)^{k-1} \cdot kt$ avec $t = 13107.2 * r * T_c$, et

b3". la répétition des étapes b1" et b2" jusqu'à la réception d'une réponse d'accès aléatoire valide,

$T_c$ étant l'unité de temps de base en 5G NR et, conformément à la norme 3GPP TS 38.211, pouvant être exprimé comme $1/(480 * 103 * 4096) * 106$ $\mu$s $= 100/196608$ $\mu$s [ce qui correspond à 0,509 ns].

7. Méthode itérative selon l'une des revendications 1 à 6, **caractérisée en ce que**
le préambule PRACH est détecté dans une fenêtre de détection PRACH à la station de base et la réponse d'accès aléatoire est transmise par la station de base si le préambule PRACH est entièrement arrivé dans la fenêtre de détection PRACH.

8. Méthode itérative selon l'une des revendications 1 à 7, **caractérisée en ce que**
le préambule PRACH est un préambule PRACH à longue séquence du format PRACH 0 conformément à la norme de communication 3GPP, TS 38.211.

9. Méthode itérative selon l'une des revendications 1 à 8, **caractérisée en ce qu'**elle est adaptée aux communications air-sol, en particulier l'équipement émetteur-récepteur étant un équipement embarqué à bord d'un aéronef et la station de base étant une unité au sol.

10. Méthode itérative pour le transfert d'un équipement émetteur-récepteur d'une station de base desservant la portée cellulaire maximale C à une station de base desservant une portée cellulaire maximale C1, ledit équipement émetteur-récepteur transmettant le préambule PRACH, ledit préambule PRACH étant un préambule PRACH à longue séquence prenant en charge une portée cellulaire de r kilomètres, qui est inférieure à la portée cellulaire maximale C, avec un décalage d'avance temporelle (Timing Advance Offset), TAO, comprenant

$t1_0, ... , t1_{k-1}, t1_k, ... , t1_n$ sur un canal d'accès aléatoire (Random Access Channel) à la station de base desservant la portée cellulaire maximale C1,
la méthode comprenant les étapes ci-après :

i. la transmission du préambule PRACH avec un TAO $t1_0$ initial,
ledit TAO $t1_0$ étant

1) le TAO utilisé pour la station de base desservant la portée cellulaire maximale C, en particulier le $k^{th}$ TAO $t_k$, $t_k$ étant déterminé par la mise en œuvre de la méthode selon l'une des revendications 1 à 9, ou
2) calculé par l'équipement émetteur-récepteur en fonction de la portée cellulaire maximale C1, ou
3) calculé par l'équipement émetteur-récepteur estimant la distance jusqu'à la station de base desservant la portée cellulaire maximale C1,

et

ii. l'exécution des étapes b1 à b3 de la méthode selon la revendication 1, en particulier les étapes b1' à b3' ou b1" à b3", de la méthode selon la revendication 6 jusqu'à la réception d'une réponse d'accès aléatoire valide.

11. Méthode itérative selon la revendication 10, **caractérisée en ce que**
l'étape ii. est poursuivie si le TAO $t1_{k-1} = 0$ précédent ou $t1_{k-1} = 13107.2 * (C - r) * T_c$, $T_c$ étant l'unité de temps de base en 5G NR et, conformément à la norme 3GPP TS 38.211, pouvant être exprimé comme $1/(480 * 103 * 4096) * 106$ $\mu$s = $100/196608$ $\mu$s [ce qui correspond à 0,509 ns].

12. Équipement émetteur-récepteur configuré pour accéder à un réseau de communication cellulaire ou pour passer d'une station de base desservant une portée cellulaire maximale C à une station de base desservant une portée cellulaire maximale C1, ledit équipement émetteur-récepteur comprenant

- des moyens de mise en œuvre de la méthode itérative selon l'une des revendications 1 à 9 et/ou selon la revendication 10 ou 11.

13. Équipement émetteur-récepteur selon la revendication 12, **caractérisé en ce qu'**il
s'agit d'un équipement embarqué dans un avion, ledit équipement embarqué servant de passerelle pour la distribution ultérieure du trafic aux équipements utilisateurs à bord de l'avion.

14. Programme informatique comprenant des instructions qui, lorsque le programme est exécuté par un équipement émetteur-récepteur, amènent l'équipement émetteur-récepteur à exécuter la méthode itérative selon l'une des revendications 1 à 9 et/ou selon la revendication 10 ou 11.

15. Signal de support de données, portant le programme informatique selon la revendication 14.

a.
transmitting a PRACH preamble with an initial starting TAO
$t_0/t1_0$, said starting TAO $t_0/t1_0$ being
- calculated by the transceiver equipment depending on the
maximum cell range C/C1
or
- the $k^{th}$ TAO $t_k$ as determined previously by the method
according to the invention

b2.
determining no valid RA
Response being received
within a predetermined
waiting interval and
transmitting the PRACH
preamble with a $k^{th}$ TAO $t_k/t1_k$,
said $k^{th}$ TAO $tk/t1_k$ being
calculated by adding and/or
subtracting a multiple of
$t = 13107.2 * r * Tc$ to a
preceding TAO $t_{k-1}/t1_{k-1}$

b3.

b1.
determining a valid RA
Response being received
within a predetermined
waiting interval

c.
adapting the $k^{th}$ TAO by
timing advance command
included in the RS
Response validly received.

d.
ramping up the PRACH
preamble transmit power
according to the values
signalled by the base
station in SIB1.

Fig. 1

Fig. 2a

Fig. 2b

Fig. 3

*PRACH Detection window*

Fig. 4

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2408253 B1
- EP 2427018 B1
- EP 3157296 A1